**Europäisches Patentamt**

**European Patent Office**

**Office européen des brevets**

(11) Veröffentlichungsnummer: **0 204 193**
**A2**

# (12) EUROPÄISCHE PATENTANMELDUNG

(21) Anmeldenummer: **86106643.9**

(22) Anmeldetag: **15.05.86**

(51) Int. Cl.4: **B01D 53/34** , B01D 53/14

(30) Priorität: **01.06.85 DE 3519661**

(43) Veröffentlichungstag der Anmeldung:
**10.12.86 Patentblatt 86/50**

(84) Benannte Vertragsstaaten:
**DE FR GB IT**

(71) Anmelder: **M A N Technologie GmbH**
**Dachauer Strasse 667**
**D-8000 München 50(DE)**

(72) Erfinder: **Gehringer, Helmut**
**Feldmochinger Strasse 41c**
**D-8000 München 50(DE)**

(54) **Verfahren und Vorrichtung zum Trennen von CO2-Anteilen aus Gasen.**

(57) Vorrichtung zum Trennen von $CO_2$-Anteilen aus Abgasen, bei der das Abgas (14) im Gegenstrom zu einer Waschlauge durch einen rotierenden Absorber (12, 13) geführt wird. Um den Beladungsgrad der Waschlauge möglichst voll nützen und damit Waschlauge einsparen zu können, .wird ein aus zwei Stoffaustauschtrommeln (12 und 13) bestehender Absorber verwendet, wobei die Trommeln in Bezug auf die Abgasströmungsrichtung hintereinander angeordnet sind. Das neu in die Vorrichtung einströmende Rohgas (14) wird dabei mit der bereits durch die zweite Waschstufe geführte gebrauchte Waschlauge beaufschlagt.

Fig.1

EP 0 204 193 A2

## Verfahren und Vorrichtung zum Trennen von $CO_2$-Anteilen aus Gasen

Die Erfindung bezieht sich auf ein Verfahren und eine Vorrichtung zum Trennen von $CO_2$-Anteilen aus Gasen, insbesondere Abgasen, bei dem das Gas in einem rotierenden Stoffaustausch-Hohlzylinder im Gegenstrom mit einem Waschmedium beaufschlagt wird, das das $CO_2$ aufnimmt.

Bei Verbrennungsmotoren mit geschlossenem argonhaltigen Verbrennungsluft-Kreislauf werden die Argon, $H_2O$ und $CO_2$ enthaltenden Abgase gereinigt und daraus das Argon zurückgewonnen und wieder in den Verbrennungsprozeß eingeführt. Das heißt, die $H_2O$-und die $CO_2$-Anteile müssen aus den Abgasen herausgetrennt werden.

Eine bekannte Methode zur Entfernung des $CO_2$-Anteiles aus den Abgasen ist die chemische Naßwäsche mit entsprechenden Laugen. Ein bekanntes Verfahren besteht in der Verwendung einer Absorberkolonne mit einer Füllkörperschüttung, beispielsweise Raschig-Ringen, über die das Abgas von unten nach oben und das Waschmedium im Gegenstrom von oben nach unten geführt wird. Der Prozeßdurchsatz und die Waschmediummenge sind hierbei für eine optimale Betriebsweise fest vorgegeben, was sich daraus ergibt, daß für den erzielbaren Wascheffekt die Kontaktzone zwischen Gas und Waschmedium, die durch die Art, Menge und Füllkörper-Schütthöhe festgelegt ist, maßgebend ist.

Hinzu kommt, daß aufgrund der Führung der Waschflüssigkeit über die Waschstrecke durch Nutzung der Schwerkraft alleine zwangsläufig Grenzen für die jeweils erforderlichen Kolonnen-Mindesthöhen festgelegt sind.

Man hat daher Waschaggregate mit einem rotierenden, als Schleuder ausgebildeten Absorber mit einem stoffaustauschenden Mantel entwickelt, bei dem durch die Aufgabe des Waschmediums auf der Innenseite der Trommel abhängig von der Drehzahl eine Fliehkraft mit dem Vielfachen der Erdbeschleunigung auf das Waschmedium erreichbar ist. Bei gleichzeitiger Führung des Abgases im Gegenstrom können somit die Abmessungen des Gerätes durch geringere Stoffaustauschflächen und Packungstiefen wesentlich reduziert werden. Eine nach diesem System arbeitende bekannte Vorrichtung besteht in einem Behälter, in dessen oberen Hälfte ein Stoffaustausch-Hohlzylinder drehbar gelagert ist. Das Waschmedium wird gegen die Innenwand der Trommel gesprüht, während das Rohgas in den Behälter außerhalb der Trommel einströmt und durch die Trommelwandung und einen konzentrisch unterhalb des Stoffaustausch-Hohlzylinders angeordneten Absaugkanal abgesaugt wird. Das verbrauchte Waschmedium sammelt sich im Behälter um den Absaugkanal herum, von wo aus es über eine Leitung abgeführt wird.

Ein derartiges Verfahren läßt sich bei gleichem Wirkungsgrad mit einer Vorrichtung mit wesentlich geringerer Baugröße herstellen, als bei den bekannten Methoden mit feststehender Schüttung. Mit den Geräten mit rotierendem Absorber kann bei vertretbarer Gerätegröße der $CO_2$-Gehalt der Abgase entsprechend den gewünschten Anforderungen bis auf ein Mindestrestgehalt von 4 Vol% reduziert werden, was jedoch nur unter Anwendung einer sehr großen Menge an Waschflüssigkeit möglich ist.

Der Erfindung liegt die Aufgabe zugrunde, ein Verfahren der eingangs genannten Art zu schaffen, bei dem bei guter Waschqualität weniger Waschmedium verwendet werden muß.

Die Aufgabe wird erfindungsgemäß mit den im Anspruch 1 gekennzeichneten Merkmalen gelöst.

Der Erfindung liegt die Erkenntnis zugrunde, daß die Beladungsfähigkeit des Waschmediums mit $CO_2$ bei dessen Durchführung durch eine Stoffaustauschtrommel nicht voll ausgenutzt wird. Bei der erfindungsgemäßen mindestens zweistufigen Waschmethode, bei der eine Stufe mit gebrauchtem Waschmedium betrieben wird, konnte dagegen festgestellt werden, daß das Beladungs-Potential des Waschmediums fast nahezu vollständig genutzt werden kann. Hierdurch ist es möglich, mit einer wesentlich geringeren Menge an frischem Waschmedium auszukommen, was im allgemeinen von Vorteil ist und für mobile Verbrennungsmaschinen mit geschlossenem Kreislauf den besonderen Vorteil bietet, daß eine wesentlich geringere Menge an Waschmedium mitgeführt werden muß.

Die Erfindung erstreckt sich auf eine Vorrichtung zur Durchführung des Verfahrens mit dem im Anspruch 2 gekennzeichneten Merkmalen. Diese Vorrichtung bietet eine große Palette von Ausgestaltungsmöglichkeiten, die es ermöglichen, das Aggregat jeweils den äußeren Raumbedingungen optimal anzupassen.

Die Stoffaustausch-Hohlzylinder können dabei entweder axial nebeneinander bzw. übereinander oder auch konzentrisch ineinander angeordnet und bei drehbeweglicher Lagerung gemeinsam angetrieben werden. Das Waschmedium, im allgemeinen eine Waschflüssigkeit wird zweckmäßigerweise über axial angeordnete Sprühdosen gegen die Innenwand der Stoffaustausch-Hohlzylinder gesprüht, während das Prozeßgas von außen an den Hohlzylinder herangeführt wird. Bei rotierenden Ausführungen bildet der Stoffaustausch-Hohlzylinder den Mantel einer Schleudertrommel, wobei der Trommelboden mit Austrittslöcher für das Prozeßgas versehen ist.

Eine besonders vorteilhafte Ausgestaltung besteht darin, daß die Stoffaustausch-Hohlzylinder liegend, d. h. mit horizontaler Achse angeordnet sind. Dieses ermöglicht eine gute Raumnutzung, was z.B. in U-Booten ein wesentlicher Gesichtspunkt ist. Dabei ist eine günstige Anordnungsmöglichkeit im kreisflächigen Bootsquerschnitt gegeben, wobei bei Bootsneigungen um die Längsachse der Waschmittelsumpf nicht die Stoffaustauschtrommel überfluten kann. Die liegende Anordnung der Hohlzylinder hat den weiteren Vorteil, daß dabei die Reibungsverluste zwischen Roh-und Reingasseite sehr gering sind und dadurch eine hohe Drehzahl möglich ist. Eine Erhöhung der Drehzahl der Schleudertrommel verbessert den Wascheffekt, so daß kleinere Waschstrecken verwendet werden können.

Eine die Fertigung vereinfachende Ausführung besteht darin, daß ein als Schleudertrommel ausgebildeter rotierender und ein stehender Stoffaustausch-Hohlzylinder vorgesehen sind.

Die Erfindung wird anhand von in der Zeichnung schematisch dargestellten Ausführungsbeispielen näher erläutert.

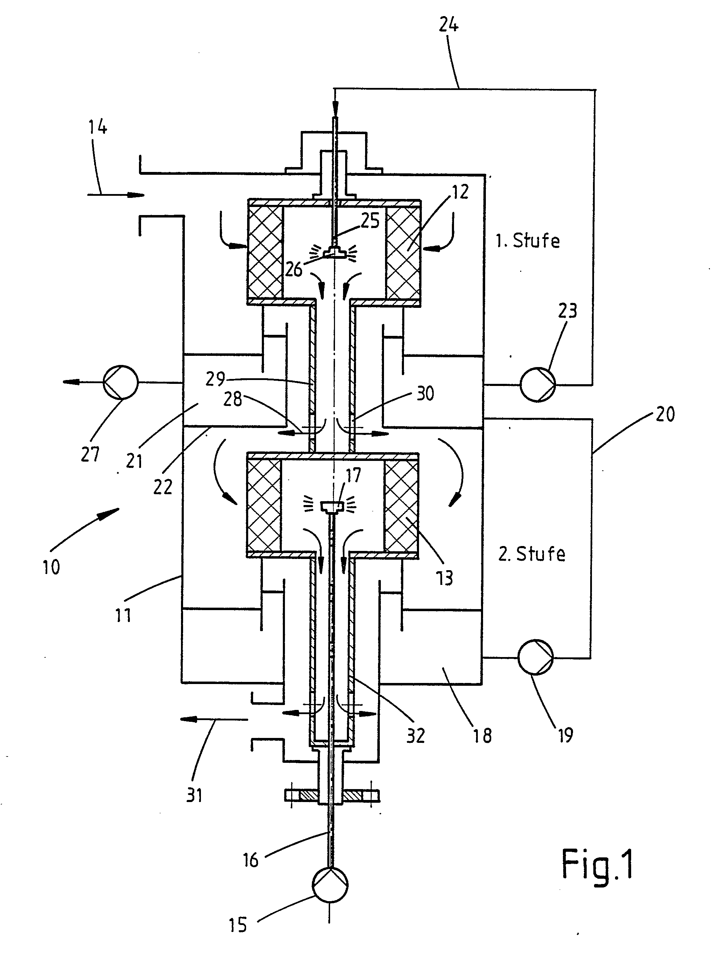

Die Fig. 1 -3 zeigen je ein Ausführungsbeispiel.

Fig. 1 zeigt eine stehende Waschvorrichtung 10, bestehend aus einem Gehäuse 11, in dem zwei Schleudertrommeln einer ersten Stufe bzw. einer zweiten Stufe untereinanderliegend drehbar gelagert sind, deren Mäntel Stoffaustausch-Hohlzylinder 12 bzw. 13 für das $CO_2$ bilden.

Die Schleudertrommeln sind miteinander gekoppelt und werden gemeinsam angetrieben. Das Waschmedium, z.B. Kali-oder Natronlauge oder Meerwasser wird mittels einer Pumpe 15 durch eine axial angeordnete Leitung 16 und einen an deren Ende befindlichen Radialdüsenkopf 17 gepumpt. Der Radialdüsenkopf 17 ist in der zweiten Stufe so angeordnet, daß das Waschmedium radial gegen den Stoffaustausch-Hohlzylinder 13 gesprüht wird, diesen durchdringt und sich im unteren Bereich des Behälters 11 einen Sumpf 18 bildend sammelt. Aus diesem Flüssigkeitssumpf 18 wird mittels einer zweiten Pumpe 19 Waschmedium über eine Leitung 20 in eine obere Wanne 21 gepumpt, die durch eine Trennwand 22 gebildet ist. Mit einer weiteren Pumpe 23 wird Waschmedium aus der oberen Wanne 21 über eine Leitung 24 und einen durch das obere Gehäuseende in den oberen Stoffaustausch-Hohlzylinder 12 der ersten Stufe führendes Rohr 25 gepumpt. Das aus einem zweiten Düsenkopf 26 sprühende gebrauchte Waschmedium sammelt sich nach dessen Durchfluß durch den Stoffaustausch-Hohl zylinder 12 ebenfalls in der oberen Wanne 21. Mit einer vierten Pumpe 27 ist das Waschmedium aus dieser Wanne 21 abführbar.

Das Rohgas, beispielsweise Abgas 14 tritt in die obere, erste Stufe ein und wird beim Durchqueren der Stoffaus-Hohlzylinder 12 im Gegenstrom mit gebrauchtem Waschmedium unter Abgabe von $CO_2$ beaufschlagt. Das auf diese Weise vorgereinigte Gas 28 wird über eine beide Stufen verbindende Hohlwelle 29 der unteren zweiten Stufe zugeführt. Das Gas strömt aus radialen Öffnungen 30 aus der Hohlwelle 29 heraus, um radial von außen in den Stoffaustausch-Hohlzylinder 13 der zweiten Stufe einzudringen, wo es mit frischem, auch im Gegenstrom fließendem Waschmedium in Kontakt gebracht und dabei bis zum erwünschten Grad gereinigt wird. Das gereinigte Gas 31 strömt - schließlich über eine zweite Hohlwelle 32 und zum Beispiel über nicht dargestellte Zuführleitungen zurück zu einem Verbrennungsmotor.

Über die erste Pumpe 15 wird nur so viel frische Lauge in die Waschanlage 10 eingeführt, wie zur Erzielung des $CO_2$-Endgehaltes erforderlich ist. Das teilbeladende und mit der Pumpe 19 in den oberen Behälter 21 gepumpte Waschmedium wird mit der Pumpe 23 im Kreislauf solange über die Waschstrecke der ersten Stufe geführt, bis die maximale Beladungsfähigkeit erreicht wird. Über die Pumpe 27 erfolgt dann die Ausspeisung des verbrauchten Waschmediums. Bei einer derartigen Verfahrensweise müssen die Waschstrecken der beiden Stufen entsprechend ihrer unterschiedlichen Beladung verschieden dimensioniert werden. Die Pumpen 15, 19 und 27 können in Abhängigkeit des Beladungszustandes des Waschmediums im Behälter 21 automatisch geregelt werden.

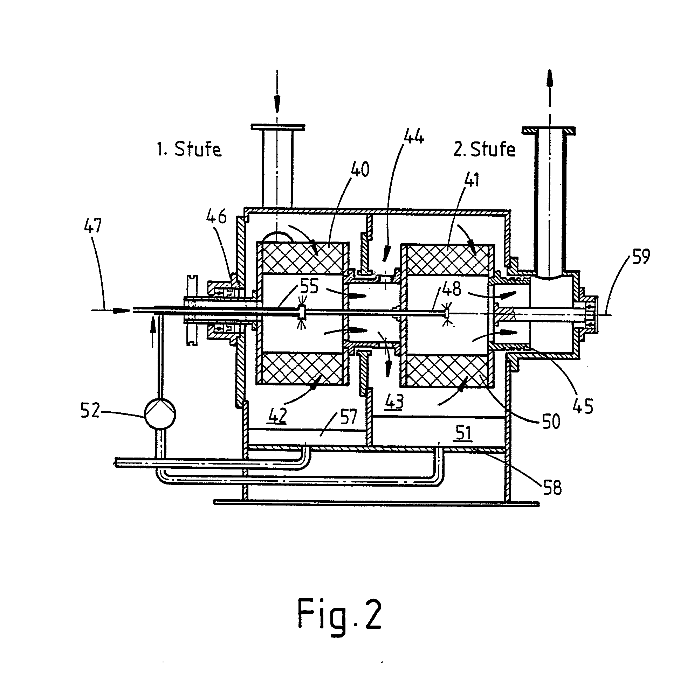

In Fig. 2 ist eine Anordnung mit liegenden Stoffaustausch-Hohlzylindern 40 und 41 gezeigt, wobei die Gehäusekammern 42 und 43 der ersten bzw. der zweiten Stufe durch Lippen-oder Labyrinthdichtungen 44 bis 46 voneinander und nach außen hin abgedichtet sind.

Das frische Waschmedium 47 fließt durch ein dünneres Rohr 48 in den Stoffaustausch-Hohlzylinder 50 der zweiten Waschstufe und sammelt sich mit $CO_2$ beladen im Sumpf 51. Das gebrauchte Waschmedium aus dem Sumpf 51 wird mittels einer Pumpe 52 und über ein das dünne Rohr 48 konzentrisch umgehendes zweites Rohr 55 in die erste Stufe gepumpt. Die Funktionsweise dieser Einrichtung ist ähnlich wie die der vorhergehenden Ausführung. Nur hat die Ausführung nach Fig. 2 besonders bei deren Verwendung in Schiffen den Vorteil, daß die Waschmediumsümpfe 51 und 57 zumindest in einer Schaukelbewegung des Schiffes nicht die Stoffaustauschtrommeln 40, 41 überschwemmen. Bei zylindrischer Ausbildung des Gehäuses 58 können die Sümpfe 51, 57 eine Schwenkbewegung um die Geräteachse 59 mitmachen derart, daß die Abstände zwischen Stoffaustauschtrommeln 40, 41 und Sumpfspiegeln konstant bleiben.

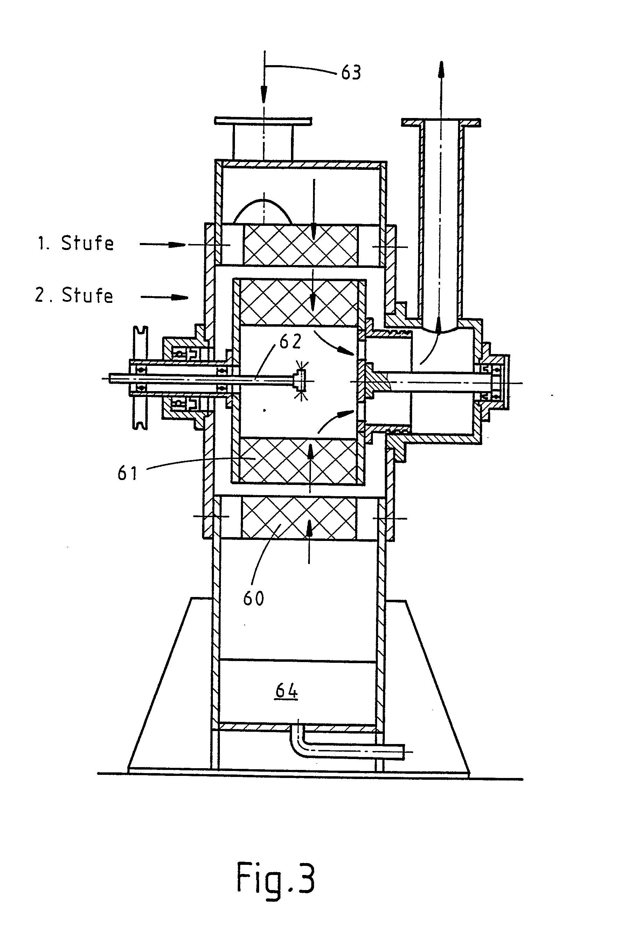

Fig. 3 zeigt eine fertigungstechnisch einfache Ausführung, bei der in der ersten Waschstufe ein stehender Stoffaustausch-Hohlzylinder 60 und in der zweiten Waschstufe eine rotierende Stoffaustauschtrommel 61 vorgesehen ist, die konzentrisch ineinander und mit horizontaler Achse angeordnet sind. Bei dieser Ausführung ist nur eine Waschmediumsprühanlage 62 erforderlich, die Frischmedium gegen die Stoffaustauschtrommel 61 der zweiten Waschstufe sprüht. Durch die Zentrifugalkraft wird das zum großen Teil mit $CO_2$ beladende Waschmedium von dem rotierenden Stoffaustausch-Hohlzylinder 61 auf den stehenden Stoffaustausch-Hohlzylinder 60 geschleudert, wo es zur Vorwäsche des radial einströmenden Rohgases 63 mit dem neu eintretenden Rohgas 63 in Kontakt kommt. In der ersten Waschstufe findet eine weitere Beladung des Waschmediums statt, wobei keine wiederholte Verwendung des gebrauchten Waschmediums vorgesehen ist. Das Waschmedium wird unabhängig des Beladungsgrades aus dem Sumpf 64 abgeführt.

In entsprechender Weise können Waschanlagen mit mehr als zwei Stufen vorgesehen werden, wodurch z.B. geringes Austauschvolumen der einzelnen Hohlzylinder durch erweiterte Stufenbeladung des Waschmediums kompensiert werden kann.

**Ansprüche**

1. Verfahren zum Trennen von $CO_2$-Anteilen aus Prozeßgasen, insbesonders Abgasen aus einem Verbrennungsprozeß, bei dem das Gas in einem rotierenden Stoffaustausch-Hohlzylinder im Gegenstrom mit einem Waschmedium beaufschlagt wird, das das $CO_2$ aufnimmt, dadurch gekennzeichnet, daß die Trennung in mindestens zwei Waschstufen erfolgt derart, daß das Prozeßgas in einer ersten Waschstufe mit bereits mit $CO_2$ beladendem Waschmedium und abschließend in einer letzten Stufe mit frischem Waschmedium beaufschlagt wird.

2. Vorrichtung zur Durchführung des Verfahrens nach Anspruch 1, bestehend aus einer Rotationswaschanlage, in der das Prozeßgas und ein Waschmedium im Gegenstrom durch einen rotierenden Stoffaustausch-Hohlzylinder durchführbar sind, dadurch gekennzeichnet, daß je einer Waschstufe mindestens ein Stoffaustausch-Hohlzylinder (12, 13; 40, 41; 60, 61) zugeordnet ist, daß die Stoffaustausch-Hohlzylinder verschiedene Waschstufen in Strömungs richtung des Prozeßgases hintereinander angeordnet und das Mittel (19, 23; 52) vorgesehen sind, mit denen das gebrauchte Waschmedium aus der letzten Waschstufe in die vorhergehende(n) Waschstufe(n) führbar ist.

3. Vorrichtung nach Anspruch 2, dadurch gekennzeichnet, daß zwei in Achsrichtung übereinander angeordnete Stoffaustausch-Hohlzylinder (12, 13) vorgesehen sind.

4. Vorrichtung nach Anspruch 2, dadurch gekennzeichnet, daß zwei nebeneinander angeordnete Stoffaustausch-Hohlzylinder (40, 41) mit waagerecht liegender Achse vorgesehen sind.

5. Vorrichtung nach Anspruch 2, dadurch gekennzeichnet, daß zwei konzentrisch ineinander angeordnete Stoffaustausch-Hohlzylinder (60, 61) vorgesehen sind.

6. Vorrichtung nach einem der Ansprüche 2 bis 5, dadurch gekennzeichnet, daß mindestens ein Stoffaustausch-Hohlzylinder (60) unbeweglich ist.

7. Vorrichtung nach einem der Ansprüche 2 bis 5, dadurch gekennzeichnet, daß die Stoffaustausch-Hohlzylinder (12, 13; 40, 41) miteinander gekoppelt, drehbeweglich angeordnet sind.

8. Vorrichtung nach einem der Ansprüche 2 bis 7, dadurch gekennzeichnet, daß die Stoffaustausch-Hohlzylinder (12, 13; 40, 41; 60, 61) von einem Gehäuse (11) umgeben sind, das getrennte, jeweils einem Hohlzylinder bzw. einer Waschstufe zugeordnete Wannen (18, 21; 42, 43) bildet, in denen sich das gebrauchte Waschmedium sammelt.

9. Vorrichtung nach Anspruch 8, dadurch gekennzeichnet, daß die Wannen von mindestens einem Teil der Waschstufen über mit jeweils einer Pumpe (19) versehenen Leitungen (20) strömungstechnisch miteinander verbunden sind.

10. Vorrichtung nach Anspruch 8 oder 9, dadurch gekennzeichnet, daß zumindest in der ersten Waschstufe die zugehörige Waschmedium-Einführeinrichtung (25, 26) strömungstechnisch mit der Wanne (21) der ersten Waschstufe verbunden ist.

11. Vorrichtung nach einem der Ansprüche 8 bis 10, dadurch gekennzeichnet, daß eine Waschmedium-Einführeinrichtung (55) einer Waschstufe strömungstechnisch mit der Wanne (43) der Vorstufe verbunden ist.

Fig.1

Fig.2

63

1. Stufe

2. Stufe

62

61

60

64

Fig.3